(19) Europäisches Patentamt
European Patent Office
Office européen des brevets

(11) EP 0 600 171 B1

(12) EUROPÄISCHE PATENTSCHRIFT

(45) Veröffentlichungstag und Bekanntmachung des Hinweises auf die Patenterteilung:
**15.01.1997 Patentblatt 1997/03**

(51) Int Cl.6: **D06N 7/00**, D06N 3/14, C08G 18/42, D06M 15/564

(21) Anmeldenummer: **93115082.5**

(22) Anmeldetag: **20.09.1993**

(54) **Schwerentflammbarer Teppichboden**

Flame-retardant carpet

Tapis difficilement inflammable

(84) Benannte Vertragsstaaten:
**AT BE CH DE DK ES FR GB IT LI NL PT**

(30) Priorität: **30.09.1992 DE 9212981 U**
**18.06.1993 DE 9309105 U**

(43) Veröffentlichungstag der Anmeldung:
**08.06.1994 Patentblatt 1994/23**

(73) Patentinhaber: **HOECHST AKTIENGESELLSCHAFT**
**65929 Frankfurt am Main (DE)**

(72) Erfinder:
- **Weber, Manfred**
**D-61479 Glashütten (DE)**
- **Schwarz, Gerhard**
**D-63456 Hanau (DE)**

(56) Entgegenhaltungen:
**EP-A- 0 006 174**
**EP-A- 0 204 938**
**EP-A- 0 206 217**
**DE-U- 7 907 356**
**FR-A- 2 369 815**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 600 171 B1

Printed by Jouve, 75001 PARIS (FR)

## Beschreibung

Die vorliegende Erfindung betrifft einen schwerentflammbaren Teppichboden aus einem Trägermaterial, einem darin eingebundenen Polgarn und einer Rückenausrüstung, wobei das Polgarn aus schwerentflammbaren Synthesefasern, das Trägermaterial aus normal oder schwerentflammbaren Synthesefasern und die Rückenausrüstung aus einem Polyurethan besteht.

Teppiche im Sinne der vorliegenden Erfindung sind nach verschiedenen Herstellungsverfahren von Hand oder maschinell hergestellte textile Flächengebilde, die aus einem Träger - auch Grundgewebe genannt - und einer für den Gebrauch wichtigen Polschicht bestehen und die überwiegend als Fußbodenbelag eingesetzt werden. Der Träger der Teppiche besteht aus einem vliesartigen, gewebeartigen oder gewirkeartigen Flächengebilde, in das Büschel oder Schlingen von Polgarnen eingebunden sind, die sich einseitig senkrecht über der Ebene des Trägermaterials erheben. Je nach der Art der Herstellung und der daraus resultierenden unterschiedlichen Art der Einbindung der Polgarne in den Träger, werden verschiedene Teppicharten unterschieden, z.B. Knüpfteppiche, die manuell oder maschinell hergestellt werden können, handgewebte oder maschinengewebte Teppiche, gewirkte Teppiche, z.B. Rasche- oder Kettwirk-Teppiche und, insbesondere bei Einsatz von Nadelvliesträgern, getuftete Teppiche. Allen diesen Teppichkonstruktionen ist gemeinsam, daß die Polfäden in den Träger - den sogenannten Teppichgrund - eingebunden sind und ihn durchsetzen, d.h. daß die Polgarne mit den Garnen des Trägers in einer aus der Herstellung resultierenden Gesetzmäßigkeit verschlungen sind. Diese Einbindung der Polgarne in den Träger führt zwar bereits zu einer Verankerung des Polmaterials im Träger, die aber in der Regel nicht ausreicht, um dem Teppichboden, die für den Dauergebrauch erforderliche Festigkeit, insbesondere die sogenannte Noppenfestigkeit, die den Widerstand der Polgarne gegen Herausziehen aus dem Träger kennzeichnet, zu gewährleisten. Es ist daher üblich, die genannten Teppichmaterialien von der Trägerseite her zu imprägnieren und/oder mit einer Rückenbeschichtung zu versehen, um die Gebrauchseigenschaften des Teppichs, insbesondere die Noppenfestigkeit, aber auch den Warengriff, den Notwendigkeiten des Dauergebrauchs und den Erwartungen des Anwenders anzupassen.

Teppichböden werden in zunehmendem Maße für den Innenausbau von Objekten eingesetzt, die besonders hohen Brandschutz-Anforderungen unterliegen. Insbesondere ist hier zu nennen der Innenausbau von öffentlichen Einrichtungen, von Hotels, insbesondere ab der 8. Etage, von öffentlichen Verkehrsmitteln wie Schnellzügen, Passagierschiffen und insbesondere von Flugzeugen. An die Schwerbrennbarkeit von Teppichwaren werden daher zunehmend höhere Anforderungen gestellt. Diese gehen nicht nur vom Verbraucher, sondern auch schon vom Gesetzgeber aus und werden von herkömmlichen Teppichwaren nur in unzureichem Maße erfüllt. Insbesondere müssen Teppichwaren, die für den Flugzeug-Innenausbau eingesetzt werden, die über die Anforderungen des DIN 4102 hinausgehenden Anforderungen des sogenannten Boing-Tests (Federal Register, Vol. 37, No. 37, (Title 14 - Aeronautics and Space) Seite 52) erfüllen. Diese schärferen Bestimmungen des Boing-Tests werden beispielsweise von Polyamid-Teppichen, die den Anforderungen für schwerentflammbare Baustoffe, Klasse B1, nach DIN 4102 entsprechen, nicht erfüllt.

Es ist zwar bekannt, daß der Boing-Test von Wollteppichen, die mit einer speziellen Flammfest-Ausrüstung versehen sind, erfüllt wird. Ein gravierender Nachteil dieser Teppiche besteht jedoch darin, daß

1. die Ausrüstung durch Shampoonieren entfernt wird, d.h. daß beim Reinigen der Teppiche die Brennbarkeit wieder ansteigt und
2. daß die flammfeste Ausrüstung einen hohen Anteil zum Gewicht des Teppichs beiträgt. Die Gewichtserhöhung der Teppiche durch die Ausrüstung ist aber gerade für den Einsatz im Flugzeugbau als ein gravierender Nachteil anzusehen.
3. Wollausrüstung enthält umweltschädliches Schwermetall (Zirkonium) und führt zu Abwasserbelastung und Entsorgungsproblemen.

Aus dem Deutschen Gebrauchsmuster Nr. 79 07 356 ist ein Tufting-Teppich bekannt, bestehend aus Flormaterial, Polyestertuftingträger und Rückenbeschichtung, wobei zur Erzielung flammhemmender Eigenschaften die Fasern und/oder Fäden des Polyestertuftingträgers flammfestmachende Mittel enthalten und vorzugsweise auch das Flormaterial und die Rückenbeschichtung flammfest ausgerüstet sind. Das Flormaterial, d.h. das Polgarn kann z.B. aus schwerbrennbaren Polyesterfasern, Modacrylfasern oder Wolle bestehen. Als flammfest machendes Mittel enthalten die dort verwendeten, schwerbrennbaren Polyesterfasern in die Polyesterkette des Polyesterrohmaterials einkondensierte Kettenglieder der Strukturformel VIII,

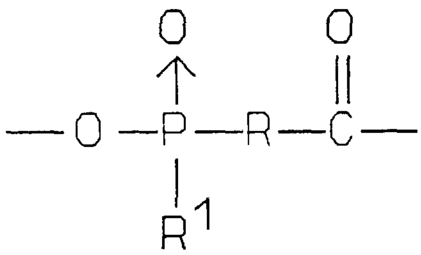

(VIII)

worin R einen gesättigten, offenkettigen oder cyclischen Alkylen-, Arylen- oder Aralkylenrest und $R^1$ einen Alkylrest mit bis zu 6 C-Atomen, einen Aryl- oder Aralkylenrest bedeuten.

Die Rückenbeschichtung dieses bekannten Tufting-Teppichs erfolgt durch einen Vorstrich mit geeigneten bekannten Latices, an den sich entweder direkt die Aufkaschierung eines Zweitrückens oder, nach einer Zwischentrocknung, eine Hauptbeschichtung, vorzugsweise ein Beschichtung mit einem geschäumten Latex anschließt. Die hierfür eingesetzten Beschichtungsmittel enthalten ebenfalls flammhemmende bzw. flammfestmachende Substanzen im notwendigen Umfang. Dieses bekannte Material ist aufgrund seines mehrschichtigen Rückenaufbaus, dem hohen Anteil an Beschichtungsmittel und der dafür erforderlichen Menge von flammfestmachenden Zusatzstoffen, nicht nur umständlich herzustellen, sondern es hat auch ein hohes Flächengewicht und ist kritisch zu entsorgen.

Die vorliegende Erfindung betrifft einen schwerentflammbaren Teppichboden mit hohem Gebrauchswert durch ausgezeichnete Dimensionsstabilität, hohe Noppenfestigkeit und vorteilhaften Warengriff. Gegenüber bisher eingesetzten Wollteppichböden hat der erfindungsgemäße Teppichboden längere Gebrauchszeiten durch Schmutzunempfindlichkeit bzw. gute Reinigungsfähigkeit und damit verlängerte Austauschzeiten, eine Gewichtseinsparung pro $m^2$ von ca. 0,5 bis 0,7 $kg/m^2$ gegenüber flammfest ausgerüsteten Wollteppichen, hohe Abriebfestigkeit, hohe Lichtechtheit durch Einsatz entsprechender Farbstoffe und Färberichtlinien, gute Naß- und Trockenreibechtheit. Beim Austausch des Teppichbodens ergeben sich keine Probleme (Toxizität) bei der Entsorgung des Altteppichs und in Müllverbrennungsanlagen ist eine Verbrennung ohne kritische Rauchgasentwicklung möglich.

Der erfindungsgemäße schwerentflammbare Teppichboden besteht aus einem Trägermaterial, einem darin eingebundenen Polgarn und einer Rücken ausrüstung und ist dadurch gekennzeichnet, daß das Polgarn aus schwerentflammbaren Synthesefasern, das Trägermaterial als normal- oder schwerentflammbaren Synthesefasern und die Rükkenausrüstung aus einem Polyurethan besteht, das aufgebaut ist aus den Bausteinen der Formeln I bis VII:

$$\text{-CO-A1-CO-} \qquad (I),$$

$$\text{-CO-A2-CO-} \qquad (II),$$

$$\text{gegebenenfalls } (\text{-O-})_n\text{-A3-(COOH)}_m \qquad (III),$$

$$\text{-O-B1-O-} \qquad (IV),$$

$$\text{gegebenenfalls -O-B2-}(\text{O-})_p \qquad (V),$$

$$\text{-NH-C1-NH-} \qquad (VI)$$

und

$$\text{-CO-NH-D1-NH-CO-} \qquad (VII),$$

worin

A1 einen aliphatischen Rest mit 2 bis 12, vorzugsweise 4-10, insbesondere 4-8, C-Atomen,
A2 einen Phenylrest, vorzugsweise einen o-, m- oder p-Phenylrest,
A3 einen aliphatischen Rest mit 2-10, vorzugsweise 4-8 C-Atomen, worin n und m jeweils die Zahlen 1 oder 2 bedeuten und n+m = 3 oder 4, vorzugsweise 3 ist, und wobei jedes der n Sauerstoffatome an A3 gebunden ist,
B1 einen aliphatischen oder cycloaliphatischen Rest mit 2 - 10, vorzugsweise 4 - 8 C-Atomen,
B2 einen aliphatischen oder cycloaliphatischen Rest mit 3 - 6, vorzugsweise einen aliphatischen Rest mit 3 oder 4 C-Atomen, worin p die Zahlen 1 oder 2 bedeutet, und wobei jedes der p Sauerstoffatome an B2 gebunden ist,
C1 einen aliphatischen oder ein- oder zweikernigen cycloaliphatischen Rest mit 2 bis 12 C-Atomen, vorzugsweise mit 5-12 C-Atomen und
D1 einen aliphatischen oder ein- oder zweikernigen cycloaliphatischen Rest mit 5 bis 36 C-Atomen, vorzugsweise mit 6-20, insbesondere 10-16 C-Atomen, bedeuten.

In Ausgestaltung der Erfindung liegen die Anteile der Bausteine I bis III, bezogen auf deren Gesamtmenge, innerhalb folgender Grenzen :

I : 40 bis 80 Mol-%, vorzugsweise mindestens 50 Mol-%
II : 10 bis 40 Mol-%, vorzugsweise 15 bis 35 Mol-%
III : 0 bis 25 Mol-%, vorzugsweise 10 bis 20 Mol-%,

die Anteile der Bausteine IV, V und VI, bezogen auf deren Gesamtmenge, innerhalb folgender Grenzen :

IV : 65 bis 95 Mol-%, vorzugsweise 75 bis 95 Mol-%
V : 0 bis 19 Mol-%,
VI : 3 bis 16 Mol-%, vorzugsweise 4,5 bis 10 Mol-%

wobei die Bausteine der Formeln I, II und IV Polyesterblöcke mit einem mittleren Molekulargewicht von 400 bis 6000 bilden
und die Anteile der Bausteine der Formel VII, bezogen auf die Gesamtmenge aller Komponenten des Polyurethanharzes, 5 bis 35 Mol-%, vorzugsweise 10 bis 25 Mol-% betragen.

Besonders bevorzugt für die Rücken ausrüstung des erfindungsgemäßen Teppichs sind Polyurethanharze in denen die Anteile der Reste I, II und IV, bezogen auf deren Gesamtmenge, innerhalb folgender Grenzen liegen:

I : 25-35 Mol-%
II : 10-20 Mol-%
IV : 45-65 Mol-%

Die Carboxylgruppen der Bausteine der Formel III nehmen nicht am Aufbau des Polyesters teil, sondern werden nach dem Einbau in das Polyurethanharz partiell oder vollständig neutralisiert mit organischen oder anorganischen Basen, vorzugsweise mit Aminen, wie z.B. Trimethylamin, Triethylamin, Dimethyl-ethanolamin, Dimethylisopropanolamin oder Dimethylamino-propanol oder mit Alkalihydroxyden.
Die Bausteine der Formeln I - VII leiten sich ab von bekannten Monomerenbausteinen, die in das Polyurethan einkondensiert werden.
Bausteine der Formel I leiten sich ab beispielsweise von Bernsteinsäure, Glutarsäure, Adipinsäure, Azelainsäure, Sebazinsäure;
Bausteine der Formel II leiten sich ab beispielsweise von Phthalsäure und insbesondere von Terephthalsäure oder Isophthalsäure;

Bausteine der Formel III leiten sich ab beispielsweise von Dihydroxymonocarbonsäuren wie α- oder β-Methylglycerinsäure, α-Propyl- oder Isopropylglycerinsäure, α-Ethyl-β-methylglycerinsäure, β,γ-Dihydroxybuttersäure, α,α-Bis-hydroxymethyl-propionsäure oder
Hydroxy-dicarbonsäuren wie Äpfelsäure, α- und β-Methyläpfelsäure, α,β-Dimethyläpfelsäure, β-Ethyläpfelsäure, α,β-Methyl-ethyläpfelsäure, α-Isopropyläpfelsäure

Bausteine der Formel IV leiten sich ab beispielsweise von Ethylenglycol, 1,4-Butandiol, Cyclohexan-dimethanol oder 1,6-Hexandiol;
Bausteine der Formel V leiten sich ab beispielsweise von Glycerin, Trimetylolpropan oder Pentaerythrit;
Bausteine der Formel VI leiten sich ab beispielsweise von Ethylendiamin, Hexamethylendiamin, 1-Amino-3-aminomethyl-3,5,5-trimethyl-cyclohexan (Isophorondiamin);
Bausteine der Formel VII leiten sich ab beispielsweise von 1,6-Diisocyanato-hexan, 3,5,5-Trimethyl-1-isocyanato-3-isocyanatomethyl-cyclohexan, 4,4'-Diisocyanatodicyclohexylmethan.
Vorzugsweise enthalten die erfindungsgemäß einzusetzenden Polyurethane keine freien Isocyanatgruppen.

Polyurethane mit einem analogen Aufbau und deren Herstellung sind aus der Europäischen Patentschrift Nr. 0 073 517 bekannt. Dort werden diese Produkte zur Herstellung lösungsmittelfester Überzüge für Holz, Papier, Metall, mineralische Untergründe Kunststoffe und Glas eingesetzt. Der erfindungsgemäße Einsatz wird in dieser Druckschrift nicht angesprochen.
Für den erfindungsgemäßen Einsatz bevorzugte Polyurethanharze werden erhalten indem man zweckmäßigerweise zunächst einen OH-funktionellen Polyester aus Bausteinen der Formel I, II, IV und ggf. V mit einem mittleren Molekulargewicht ($\overline{M_n}$) von ca. 400 bis 6000, vorzugsweise 900 bis 2500, und einer OH-Zahl von 18 bis 280, vorzugsweise 44 bis 125, herstellt, und diesen mit einer dem Baustein III zugrundeliegenden Polyhydroxy-carbonsäure und einer dem Baustein VII zugrundeliegenden Diisocyanato-Verbindung bei Temperaturen von Raumtemperatur bis ca. 100°C in einem aprotischen polaren Lösungsmittel zu einem Präpolymeren mit Carboxylgruppen und endständigen Isocyanatgruppen umsetzt.
Anschließend werden die Carboxylgruppen dieses Präpolymeren zumindest partiell neutralisiert, zum Beispiel mit einem Alkalihydroxid, vorzugsweise mit einem Amin. Das so erhaltene Zwischenprodukt wird in eine überwiegend wässrige Phase überführt und die noch vorhandenen Isocyanatgruppen mit einem Diamin als Kettenverlängerungsmittel zu den entsprechenden Harnstoffgruppen umgesetzt. Auf diese Weise wird das erfindungsgemäß einzusetzende Polyurethan direkt in Form einer feinteiligen, stabilen Polyurethan-Dispersion erhalten.

Synthesefasern im Sinne dieser Erfindung sind Endlos- oder Stapelfasern in glattem oder texturiertem Zustand. Die Stapellänge von Stapelfasern beträgt zweckmäßigerweise 25 bis 200 mm, vorzugsweise 120 bis 150 mm. Die Texturierung kann nach allen bekannten Verfahren, insbesondere durch Stauchkammerkräuselung, Falschdrahttexturierung oder aufgrund selbstkräuselnder Fasereigenschaften erzielt worden sein.

Wie bereits oben beschrieben, kann der Träger bei Web- und Raschelkettwirkteppichen als eine Grundkettschußkontruktion aufgebaut sein, oder er kann bei Tufting-Teppichen und Nadelvlieskonstruktionen als ein eigenständiges Gewebe, Spunbond oder Vliesprodukt in die Gesamtkonstruktion eingebaut werden.

Die Gewichtsanteile von Polmaterial, Träger und Ausrüstungsmittel des erfindungsgemäßen schwerentflammbaren Teppichbodens betragen etwa 700 bis 1300 g/m$^2$ Polmaterial, 80 bis 250 g/m$^2$ Träger und 150 bis 500 g/m$^2$, vorzugsweise 200 bis 300 g/m$^2$ Polyurethan-Ausrüstung. Besteht der Träger aus einem Gewebe oder einem gewebeanalogen Konstrukt, so weist er zweckmäßigerweise etwa 60 bis 150 Kettfäden und 80 bis 165 Schußfäden pro 10 cm auf. Andere Trägerkonstruktionen haben vorzugsweise eine entsprechende Fadendichte.

Das Polmaterial besteht zweckmäßigerweise aus Stapel- oder Endlosfasergarnen mit Garnstärken von Nm 0,5 bis Nm 25, vorzugsweise Nm 4 bis Nm 10. Die Garne enthalten Endlos- oder Stapelfasern. Die Stapelfasern haben einen Titer von 1 bis 30 dtex und eine Stapellänge von 25 bis 200 mm. Bei Endlosgarnen liegt die Garnstärke im gleichen Bereich wie für Stapelfasergarne. Die Einzeltiter der Endlosgarne liegen im Bereich von 1 bis 30 dtex, vorzugsweise von 5 bis 15 dtex.

Ein als Gewebe oder Maschenware ausgebildeter Träger besteht aus Stapel- oder Endlosfasergarnen mit Garnstärken von Nm 6 bis Nm 20, vorzugsweise Nm 12 bis Nm 14. Für die Garne werden Stapelfasern mit einem Titer von 6 bis 17 dtex und einer Stapellänge von 80 bis 150 mm verwendet. Bei Endlosgarnen liegt die Garnstärke im gleichen Bereich wie für Stapelfasergarne. Die Einzeltiter der Endlosgarne liegen im Bereich von 3 bis 30 dtex, vorzugsweise von 5 bis 15 dtex.

Während das Polgarn des erfindungsgemäßen schwerentflammbaren Teppichbodens stets aus flammhemmend modifizierten Synthesefasern, vorzugsweise flammhemmend modifizierten Polyesterfasern besteht, kann der Träger alternative auch aus anderen, normal entflammbaren thermoplastischen Synthesefasermaterialien, wiebeispielsweise unmodifiziertem Polyethylenterephthalat oder modifiziertem Polyethylenterephthalat, beispielsweise polyethylenglykol-modifiziertem Polyethylenterphthalat oder aus Polybutylenterephthalat bestehen.
Bevorzugt als normal entflammbares thermoplastisches Synthesefasermaterial ist unmodifiziertes Polyethylenterephthalat.

Die für den Träger, aber auch die für den Pol eingesetzten Garne können neben den genannten, gegebenenfalls flammfest modifizierten Polyesterfasern auch nicht oder weniger flammfeste Fasern aufweisen, solange die erforderliche Schwerentflammbarkeit des gesamten Teppichbodens dadurch nicht beeinträchtigt wird. Solche Begleitfasern können insbesondere dann eingesetzt werden, wenn sie zusätzliche vorteilhafte Eigenschaften des Teppichbodens, wie z.B. antistatische Wirkung, herbeiführen.

Besteht der Träger des erfindungsgemäßen schwerentflammbaren Teppichbodens aus normalen, nicht flammhemmend modifizierten, thermoplastischen Synthesefasern, so hat er zweckmäßigerweise und bevorzugt die Struktur eines Vlieses, insbesondere eines Spunbonds.
Besonders bevorzugt sind erfindungsgemäße Teppiche, bei denen auch die Garne des Trägers aus schwer entflammbaren Polyestern bestehen.

Das schwerentflammbare thermoplastische Synthesefasermaterial, aus dem Polgarne und gegebenenfalls auch die Garne des Trägers des erfindungsgemäßen, schwerentflammbaren Teppichbodens aufgebaut sind, besteht ebenfalls vorzugsweise aus Polyestern. Dabei kommen im Prinzip alle zur Faserherstellung geeigneten bekannten Typen in Betracht. Derartige geeignete Polyester bestehen überwiegend aus Bausteinen, die sich von aromatischen Dicarbonsäuren und von aliphatischen Diolen ableiten. Gängige aromatische Dicarbonsäurebausteine sind die zweiwertigen Reste von Benzoldicarbonsäuren, insbesondere der Terephthalsäure und der Isophthalsäure; gängige Diole haben 2-4 C-Atome, wobei das Ethylenglycol besonders geeignet ist.

Die Schwerentflammbarkeit des Polyestermaterials wird erzielt durch Zusätze von Halogenverbindungen, insbesondere Bromverbindungen, oder, was besonders vorteilhaft ist, durch Phosphorverbindungen, die in die Polyesterkette einkondensiert sind.

Besonders bevorzugt, sind schwer entflammbare Pol- oder auch Trägergarne aus Polyestern, insbesondere den oben genannten, die in der Kette Baugruppen der Formel VIII,

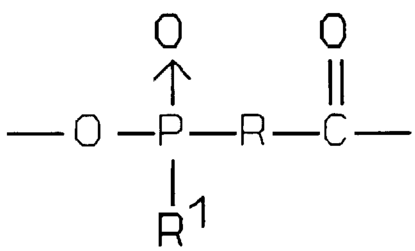

(VIII)

worin R Alkylen oder Polymethylen mit 2 bis 6 C-Atomen oder Phenyl und $R^1$ Alkyl mit 1 bis 6 C-Atomen, Aryl oder Aralkyl bedeutet, einkondensiert enthalten.

Vorzugsweise bedeuten in der Formel VIII R Ethylen und $R^1$ Methyl, Ethyl, Phenyl, oder o-, m- oder p-Methyl-phenyl, insbesondere Methyl.

Die dem Faserrohstoff zugesetzte Menge an flammfestmachenden Mitteln der Formel VIII beträgt 0,1 bis 20 Gew.-%, vorzugsweise 2,5 bis 12 Gew.-%, bezogen auf das Gesamtgewicht der Fasern bzw. der Fäden.

Besonders vorteilhaft sind erfindungsgemäße Teppiche, deren Fasern aus einem Polyestermaterial bestehen, das zu mindestens 85 mol% aus Polyethylenterephthalat besteht. Die restlichen maximal 15 mol% bestehen aus den oben genannten flammhemmenden Co-Monomeren der Formel VIII und ggf. Dicarbonsäureeinheiten und Glycoleinheiten, die als sogenannte Modifizierungsmittel wirken und die es dem Fachmann gestatten, die physikalischen und chemischen Eigenschaften der hergestellten Filamente gezielt zu beeinflussen. Beispiele für solche Dicarbonsäureeinheiten sind Reste der Isophthalsäure oder von aliphatischen Dicarbonsäure wie z.B. Glutarsäure, Adipinsäure, Sebazinsäure; Beispiele für modifizierend wirkende Diolreste sind Reste von längerkettigen Diolen, z.B. von Propandiol oder Butandiol, von Di- oder Tri-ethylenglycol oder, sofern in geringer Menge vorhanden, von Polyglycol mit einem Molgewicht von ca. 500 - 2000.

Die in den Garnen der erfindungsgemäßen Teppiche enthaltenen Polyester haben vorzugsweise ein Molekulargewicht entsprechend einer intrinsischen Viskosität (IV), gemessen in einer Lösung von 1g Polymer in 100 ml Dichloressigsäure bei 25°C, von 0,7 bis 1,4.

Ein besonders bevorzugter, schwerentflammbarer Polyester, der mit besonderem Vorteil zur Herstellung der Pol- und gegebenenfalls auch der Trägergarne des erfindungsgemäßen schwerentflammbaren Teppichbodens eingesetzt werden kann, ist ein Fasermaterial der Type ®Trevira CS der Firma Hoechst AG.

Von besonderer Bedeutung für die Qualität der Schwerentflammbarkeit ist der Anteil der Polyurethanausrüstung am Flächengewicht des erfindungsgemäßen schwerentflammbaren Teppichbodens. Im Rahmen der oben angegebenen Grenzen von 150 bis 500 $g/m^2$, vorzugsweise 200 bis 300 $g/m^2$, wird im Einzelfall die Menge des Polyurethan-Auftrags vorzugsweise so eingestellt, daß in der Ebene des Trägers eine gründliche Durchtränkung der Fasern und eine Ausfüllung der Faserzwischenräume stattfinden kann. Ein darüber hinausgehender Auftrag, der zur Ausbildung einer reinen Polyurethanschicht führt, sollte vorzugsweise vermieden werden. Unter einer reinen Polyurethanschicht ist eine solche Schicht zu verstehen, die parallel zur Fläche des Teppichbodens eine Ebene aufweist, die nicht von Fasern des Teppichträgers durchsetzt ist.

Die Figur zeigt zur Veranschaulichung beispielhaft schematisch den Aufbau eines erfindungsgemäßen Teppichs mit den Trägergarnen (1), den um die Trägergarne geschlungenen Polgarnen (2) und der Polyurethan-Rückenausrüstung (3).

Es ist als besonders überraschend anzusehen, daß der erfindungsgemäße Teppichboden außerordentlich schwerentflammbar ist, auch wenn der Träger nicht aus einem flammhemmend modifizierten Synthesefasermaterial, insbesondere flammhemmend modifiziertem Polyester, besteht und obwohl das zur Rückenausrüstung eingesetzte Polyurethan keine flammhemmenden Zusätze oder Modifizierungsmittel enthält. Dieser überraschende Effekt einer flammhemmenden Ausrüstung durch das oben definierte Polyurethan ergibt sich auch auf anderen textilen Flächengebilden.

Ein weiterer Gegenstand der vorliegenden Erfindung ist daher die Verwendung des oben definierten Polyurethans zur Ausrüstung von schwerentflammbaren Textilmaterialien aus thermoplastischen Synthesefasern sowie eine wäßrige Zubereitung zur Ausrüstung schwerentflammbarer Textilmaterialien aus thermoplastischen Synthesefasern, bestehend aus

| | |
|---|---|
| 20 - 60 Gew.-% | des oben definierten Polyurethanharzes, |
| 3 - 15 Gew.-% | eines aprotischen, wasserlöslichen, linearen oder cyclischen Carbonsäureamids mit einer Kettenlänge der zugrundeliegenden Carbonsäure von 1 bis 5 C-Atomen und |
| 37 - 77 Gew.-% | Wasser. |

Vorzugsweise enthält die Zubereitung

| | |
|---|---|
| 30 - 55 Gew.-% | des Polyurethanharzes, |
| 5 - 10 Gew.-% | des aprotischen, wasserlöslichen, linearen oder cyclischen Carbonamids und |
| 40 - 65 Gew.-% | Wasser. |

Beispiele für aprotische, lineare oder cyclische Säureamide, die in den obengenannten Zubereitungen enthalten sein können, sind Dimethylformamid, Dimethylacetamid und vorzugsweise N-Methylpyrrolidon. Zusätzlich kann das erfindungsgemäße Textilausrüstungsmittel noch übliche Zusätze, wie beispielsweise Verdickungsmittel, Antimigrationsmittel, Emulsionsstabilisatoren, Füllstoffe oder Pigmente und dergleichen in einem Anteil von bis zu 15, vorzugsweise bis zu 10 Gew.-% der Gesamtmischung enthalten.

Beim Einsatz der erfindungsgemäßen Polyurethanzubereitung zur Ausrüstung von schwerentflammbaren Textilmaterialien aus thermoplastischen Synthesefasern kommen zweckmäßigerweise Auftragsmengen von 5 bis 100 g/$m^2$, vorzugsweise 10 bis 50 g/$m^2$, zur Anwendung.

Die vorliegende Erfindung betrifft auch ein Verfahren zur Herstellung des erfindungsgemäßen schwerentflammbaren Teppichbodens. Bei diesem Verfahren wird zunächst nach einem der bekannten Knüpf-, Web-, Kettwirk- oder Tufting-Verfahren ein unverfestigter Teppichboden aus einem Träger und darin eingebundenen Polgarnen hergestellt, wie üblich gefärbt und gegebenenfalls geschoren und anschließend gewaschen, um vorhandene Spinnavivagen zu entfernen. Anschließend wird rückseitig durch Sprühauftrag, durch Aufbürsten, Aufrakeln oder Aufschäumen, gegebenenfalls unter Zusatz eines Schäumers zur Zubereitung, vorzugsweise aber durch Pflatschen mittels Pflatschwalzen eine Polyurethanzubereitung aufgetragen, die folgende Zusammensetzung aufweist:

| | |
|---|---|
| 20 - 60 Gew.-% | des oben definierten Polyurethanharzes, |
| 3 - 15 Gew.-% | eines aprotischen, wasserlöslichen, linearen oder cyclischen Carbonsäureamids mit einer Kettenlänge der zugrundeliegenden Carbonsäure von 1 bis 5 C-Atomen und |
| 37 - 77 Gew.-% | Wasser. |

Vorzugsweise enthält die Zubereitung

| | |
|---|---|
| 30 - 55 Gew.-% | des Polyurethanharzes, |
| 5 - 10 Gew.-% | des aprotischen, wasserlöslichen, linearen oder cyclischen Carbonamids und |
| 40 - 65 Gew.-% | Wasser. |

Nach dem Auftrag der Rückenausrüstung wird der Teppich bei Temperaturen von 80 bis 180°C, vorzugsweise 120 bis 150 °C, getrocknet.

Die Viskosität der Zubereitung wird so eingestellt, daß eine gute Durchdringung des Teppichrückens erreicht wird. In der Regel ist dieses Ziel zu erreichen, wenn beispielsweise für den Rakelauftrag die Viskosität der Zubereitung bei der Arbeitstemperatur im Bereich von 5000 bis 10000 mPa·s liegt. Der Auftrag der Polymerzubereitung erfolgt normalerweise bei Temperaturen von +5 bis +40 °C, vorzugsweise bei Raumtemperatur.

Vorzugsweise wird, wie oben bereits ausgeführt, die Auftragsmenge der Polyurethanzubereitung so bemessen, daß in der Ebene des Trägers eine gründliche Durchtränkung der Fasern und eine Ausfüllung der Faserzwischenräume mit dem Polyurethan stattfinden kann, ein darüber hinausgehender Auftrag, der zur Ausbildung einer reinen Polyurethanschicht führt, jedoch vermieden wird.

Weiterhin ist es bevorzugt, bei dem erfindungsgemäßen Verfahren als Material für den Teppichträger, insbesondere aber für den Pol, Garne aus schwerentflammbaren Polyestern einzusetzen. Besonders bevorzugt ist der Einsatz

von Garnen aus den oben beschriebenen Polyestern, insbesondere aus Polyethylenterephthalat, die in der Kette Baugruppen der oben angegebenen Formel VIII enthalten.

Die folgenden Ausführungbeispiele veranschaulichen die Herstellung eines schwerentflammbaren erfindungsgemäßen Teppichbodens und die Anwendung der Polyurethanzubereitung zur Ausrüstung eines schwerentflammbaren Polyestergewebes.

Beispiel 1

Ein Tufting-Teppich, bestehend aus einem durch Nadeln verfestigten Spunbond aus unmodifizierten Polyethylenterephthalat-Filamenten mit einem Flächengewicht von 120 g/m$^2$, in das ein Polgarn aus schwerentflammbarem Polyethylenterephthalat (®Trevira CS der Firma Hoechst AG) so eingenadelt ist, daß eine Polhöhe von 5,0 mm entsteht und der Gewichtsanteil der Polfasern am rohen getufteten Material 930 g/m$^2$ beträgt, wird bei 80°C in einer Waschflotte einer gründlichen Reinigung unterzogen. Hierbei werden alle auf den Garnen befindlichen Spinnpräparationen möglichst restlos entfernt. Anschließend wird der Teppich getrocknet und auf einem Pflatschwerk rückseitig mit 650 g/m$^2$ einer wäßrigen Dispersion ausgerüstet (Trockenauflage 195 g/m$^2$), die folgende Zusammensetzung aufweist:

| | |
|---|---|
| 30 Gew.-% | Polyurethanharz, |
| 5 Gew.-% | N-Methylpyrrolidon, |
| 65 Gew.-% | Wasser. |

Zur Herstellung des Polyurethanharzes wurde zunächst ein OH-funktioneller Polyester aus Adipinsäure, Isophthalsäure und 1,6-Hexandiol mit einem mittleren Molekulargewicht von ca. 1300 und einer OH Zahl von 86, Bis-hydroxymethylpropionsäure und 4,4-Diisocyanato-dicyclohexylmethan bei etwa 70 °C in N-Methylpyrrolidon-2 zu einem Präpolymeren mit Carboxylgruppen und endständigen Isocyanatgruppen umgesetzt.
Anschließend wurden die Carboxylgruppen dieses Präpolymeren mit Triethylamin partiell neutralisiert, das erhaltene Zwischenprodukt in eine überwiegend wässrige Phase überführt und die noch vorhandenen Isocyanatgruppen mit einem Diaminocyclohexanderivat als Kettenverlängerungsmittel zu den entsprechenden Hamstoffgruppen umgesetzt. Es resultierte eine feinteilige, stabile Polyurethan-Dispersion.

Nach der Ausrüstung wird der Teppich bei 120 bis 150°C getrocknet.

Der so hergestellte Teppich entspricht nicht nur den Anforderungen für schwerentflammbare Baustoffe Klasse B1 nach DIN 4102, sondern auch den Anforderungen der Flugzeugindustrie gemäß dem Boing-Test und dem Airbus Test ATS 1000.001 (Beschrieben in "Airbus Industrie - Technical Specification, Fire-Smoke-Toxicity (FST), Test Specification).

Beispiel 2

Ein Gewebe aus unmodifiziertem Polyethylenterephthalatgarn in Kreuzköperbindung mit einem Flächengewicht von 200 g/m$^2$ wird in einer Waschflotte bei 80°C gründlich von Spinnpräparationen befreit. Anschließend wird das Gewebe in einer Tränkanlage mit der im Beispiel 1 angegebenen Polyurethandispersion bis zur Sättigung getränkt und anschließend auf eine Dispersionsaufnahme von 15 bis 20 Gew.-%, bezogen auf das Gewicht des trockenen Textilmaterials abgequetscht. Das so behandelte Gewebe wird bei 120 bis 150°C getrocknet und dabei das Polyurethanharz ausgehärtet. Man erhält ein versteiftes textiles Flächengebilde, das beispielsweise hervorragend für die Herstellung von Lamellen für Horizontal- und Vertikal-Jalousien geeignet ist. Das Material entspricht nicht nur den Anforderungen für schwerentflammbare Baustoffe Klasse B1 nach DIN 4102, sondern auch den Anforderungen der Flugzeugindustrie gemäß dem Boing-Test und dem Airbus Test ATS 1000.001.

## Patentansprüche

1. Schwerentflammbarer Teppichboden bestehend aus einem Trägermaterial, einem darin eingebundenen Polgarn und einer Rückenausrüstung, dadurch gekennzeichnet, daß das Polgarn aus schwerentflammbaren Synthesefasern, das Trägermaterial aus normal- oder schwerentflammbaren Synthesefasern und die Rückenausrüstung aus einem Polyurethan besteht, das aufgebaut ist aus den Bausteinen der Formeln I bis VII:

$$-CO-A1-CO- \qquad (I),$$

$$-CO-A2-CO- \qquad (II),$$

$$\text{gegebenenfalls } (-O-)_n-A3-(COOH)_m \qquad (III),$$

$$-O-B1-O- \qquad (IV),$$

$$\text{gegebenenfalls } -O-B2-(O-)_p \qquad (V),$$

$$-NH-C1-NH- \qquad (VI)$$

und

$$-CO-NH-D1-NH-CO- \qquad (VII),$$

worin

A1 einen aliphatischen Rest mit 2 bis 12, vorzugsweise 4-10, insbesondere 4-8, C-Atomen,
A2 einen Phenylrest, vorzugsweise einen o-, m- oder p-Phenylrest,
A3 einen aliphatischen Rest mit 2-10, vorzugsweise 4-8 C-Atomen, wobei n und m jeweils die Zahlen 1 oder 2 bedeuten und n+m = 3 oder 4, vorzugsweise 3 ist, und wobei jedes der n Sauerstoffatome an A3 gebunden ist,
B1 einen aliphatischen oder cycloaliphatischen Rest mit 2 - 10, vorzugsweise 4 - 8 C-Atomen,
B2 einen aliphatischen oder cycloaliphatischen Rest mit 3 - 6, vorzugsweise einen aliphatischen Rest mit 3 oder 4 C-Atomen, wobei p die Zahlen 1 oder 2 bedeutet, und wobei jedes der p Sauerstoffatome an B2 gebunden ist,
C1 einen aliphatischen oder ein- oder zweikernigen cycloaliphatischen Rest mit 2 bis 12 C-Atomen, vorzugsweise mit 5-12 C-Atomen und
D1 einen aliphatischen oder ein- oder zweikernigen cycloaliphatischen Rest mit 5 bis 36 C-Atomen, vorzugsweise mit 6-20, insbesondere 10-16 C-Atomen, bedeuten.

**2.** Schwerentflammbarer Teppichboden gemäß Anspruch 1, dadurch gekennzeichnet, daß die Anteile der Bausteine I bis III, bezogen auf deren Gesamtmenge, innerhalb folgender Grenzen liegen:

I : 40 bis 80 Mol-%,
II : 10 bis 40 Mol-%,
III : 0 bis 25 Mol-%,

die Anteile der Bausteine IV, V und VI, bezogen auf deren Gesamtmenge, innerhalb folgender Grenzen liegen:

IV : 65 bis 95 Mol-%,
V : 0 bis 19 Mol-%,
VI : 3 bis 16 Mol-%,

wobei die Bausteine der Formeln I, II und IV Polyesterblöcke mit einem mittleren Molekulargewicht von 400 bis 6000 bilden
und die Anteile der Bausteine der Formel VII, bezogen auf die Gesamtmenge aller Komponenten des Polyurethanharzes, 5 bis 35 Mol-%, vorzugsweise 10 bis 25 Mol-% betragen.

**3.** Schwerentflammbarer Teppichboden gemäß Anspruch 2, dadurch gekennzeichnet, daß die Anteile der Bausteine I bis III, bezogen auf deren Gesamtmenge, innerhalb folgender Grenzen liegen:

I : mindestens 50 Mol-%

II : 15 bis 35 Mol-%
III : 10 bis 20 Mol-%

und die Anteile der Bausteine IV, V und VI, bezogen auf deren Gesamtmenge, innerhalb folgender Grenzen liegen:

IV : 75 bis 95 Mol-%
V : 0 bis 19 Mol-%
VI : 4,5 bis 10 Mol-%.

**4.** Schwerentflammbarer Teppichboden gemäß mindestens einem der Ansprüche 1 bis 3, dadurch gekennzeichnet, daß die Gewichtsanteile von Polmaterial, Träger und Ausrüstungsmittel des erfindungsgemäßen schwerentflammbaren Teppichbodens etwa 700 bis 1300 $g/m^2$ Polmaterial, 80 bis 250 $g/m^2$ Träger und 150 bis 500 $g/m^2$, vorzugsweise 200 bis 300 $g/m^2$ Polyurethan-Ausrüstung betragen.

**5.** Schwerentflammbarer Teppichboden gemäß mindestens einem der Ansprüche 1 bis 4, dadurch gekennzeichnet, daß der Träger eine Fadendichte entsprechend etwa 60 bis 150 Kettfäden und 80 bis 165 Schußfäden pro 10 cm aufweist.

**6.** Schwerentflammbarer Teppichboden gemäß mindestens einem der Ansprüche 1 bis 5, dadurch gekennzeichnet, daß der Träger aus normal entflammbaren thermoplastischen Synthesefasermaterialien besteht.

**7.** Schwerentflammbarer Teppichboden gemäß mindestens einem der Ansprüche 1 bis 6, dadurch gekennzeichnet, daß der Träger aus normal entflammbaren thermoplastischen Synthesefasern besteht und die Struktur eines Vlieses, insbesondere eines Spunbonds aufweist.

**8.** Schwerentflammbarer Teppichboden gemäß mindestens einem der Ansprüche 1 bis 5, dadurch gekennzeichnet, daß auch die Garne des Trägers aus schwer enfflammbaren Synthesefasern bestehen.

**9.** Schwerentflammbarer Teppichboden gemäß mindestens einem der Ansprüche 1 bis 8, dadurch gekennzeichnet, daß die Schwerentflammbarkeit des Synthesefasermaterials durch Zusätze von Halogenverbindungen oder von Phosphorverbindungen bewirkt wird.

**10.** Schwerentflammbarer Teppichboden gemäß mindestens einem der Ansprüche 1 bis 9, dadurch gekennzeichnet, daß die thermoplastischen Synthesefasern Polyesterfasern sind.

**11.** Schwerentflammbarer Teppichboden gemäß mindestens einem der Ansprüche 1 bis 10, dadurch gekennzeichnet, daß die schwer entflammbaren Polyester in der Kette Baugruppen der Formel VIII

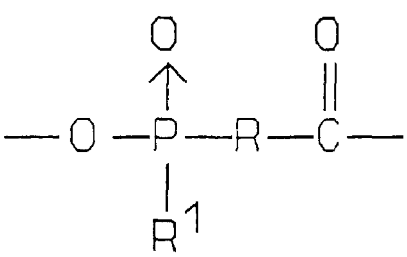

(VIII)

worin R Alkylen oder Polymethylen mit 2 bis 6 C-Atomen oder Phenyl und $R^1$ Alkyl mit 1 bis 6 C-Atomen, Aryl oder Aralkyl bedeutet, einkondensiert enthalten.

**12.** Verwendung eines Polyurethans, das aufgebaut ist aus den Bausteinen der Formeln I bis VII

$$-CO-A1-CO- \quad (I),$$

$$-CO-A2-CO- \qquad (II),$$

$$\text{gegebenenfalls } (-O-)_n-A3-(COOH)_m \qquad (III),$$

$$-O-B1-O- \qquad (IV),$$

$$\text{gegebenenfalls } -O-B2-(O-)_p \qquad (V),$$

$$-NH-C1-NH- \qquad (VI)$$

und

$$-CO-NH-D1-NH-CO- \qquad (VII),$$

worin

A1 einen aliphatischen Rest mit 2 bis 12, vorzugsweise 4-10, insbesondere 4-8, C-Atomen,
A2 einen Phenylrest, vorzugsweise einen o-, m- oder p-Phenylrest,
A3 einen aliphatischen Rest mit 2-10, vorzugsweise 4-8 C-Atomen, worin n und m jeweils die Zahlen 1 oder 2 bedeuten und n+m = 3 oder 4, vorzugsweise 3 ist, und wobei jedes der n Sauerstoffatome an A3 gebunden ist,
B1 einen aliphatischen oder cycloaliphatischen Rest mit 2 - 10, vorzugsweise 4 - 8 C-Atomen,
B2 einen aliphatischen oder cycloaliphatischen Rest mit 3 - 6, vorzugsweise einen aliphatischen Rest mit 3 oder 4 C-Atomen, worin p die Zahlen 1 oder 2 bedeutet, und wobei jedes der p Sauerstoffatome an B2 gebunden ist,
C1 einen aliphatischen oder ein- oder zweikernigen cycloaliphatischen Rest mit 2 bis 12 C-Atomen, vorzugsweise mit 5-12 C-Atomen und
D1 einen aliphatischen oder ein- oder zweikernigen cycloaliphatischen Rest mit 5 bis 36 C-Atomen, vorzugsweise mit 6-20, insbesondere 10-16 C-Atomen, bedeuten, zur Ausrüstung von schwerentflammbaren Textilmaterialien aus thermoplastischen Synthesefasern.

**13.** Verwendung des Polyurethans gemäß Anspruch 12, dadurch gekennzeichnet, daß die Anteile der Bausteine I bis III, bezogen auf deren Gesamtmenge, innerhalb folgender Grenzen liegen:

I : 40 bis 80 Mol-%,
II : 10 bis 40 Mol-%,
III : 0 bis 25 Mol-%,

die Anteile der Bausteine IV, V und VI, bezogen auf deren Gesamtmenge, innerhalb folgender Grenzen liegen:

IV : 65 bis 95 Mol-%,
V : 0 bis 19 Mol-%,
VI : 3 bis 16 Mol-%,

wobei die Bausteine der Formeln I, II und IV Polyesterblöcke mit einem mittleren Molekulargewicht von 400 bis 6000 bilden
und die Anteile der Bausteine der Formel VII, bezogen auf die Gesamtmenge aller Komponenten des Polyurethanharzes, 5 bis 35 Mol-%, vorzugsweise 10 bis 25 Mol-% betragen.

**14.** Wäßrige Zubereitung zur Ausrüstung schwerentflammbarer Textilmaterialien aus thermoplastischen Synthesefasern, bestehend aus

| | |
|---|---|
| 20 - 60 Gew.-% | eines Polyurethanharzes, |
| 3 - 15 Gew.-% | eines aprotischen, wasserlöslichen, linearen oder cyclischen Carbonsäureamids mit einer Kettenlänge der zugrundeliegenden Carbonsäure von 1 bis 5 C-Atomen und |
| 37 - 77 Gew.-% | Wasser, |

die gegebenenfalls zusätzlich noch übliche Zusätze, wie Verdickungsmittel, Antimigrationsmittel, Emulsionsstabilisatoren, Füllstoffe oder Pigmente in einem Anteil von bis zu 15 Gew.-% der Gesamtmischung enthält, wobei das Polyurethan aufgebaut ist aus den Bausteinen der Formeln I bis VII

$$-CO-A1-CO- \quad (I),$$

$$-CO-A2-CO- \quad (II),$$

$$\text{gegebenenfalls } (-O-)_n-A3-(COOH)_m \quad (III),$$

$$-O-B1-O- \quad (IV),$$

$$\text{gegebenenfalls } -O-B2-(O-)_p \quad (V),$$

$$-NH-C1-NH- \quad (VI)$$

und

$$-CO-NH-D1-NH-CO- \quad (VII),$$

worin

A1 einen aliphatischen Rest mit 2 bis 12, vorzugsweise 4-10, insbesondere 4-8, C-Atomen,
A2 einen Phenylrest, vorzugsweise einen o-, m- oder p-Phenylrest,
A3 einen aliphatischen Rest mit 2-10, vorzugsweise 4-8 C-Atomen, worin n und m jeweils die Zahlen 1 oder 2 bedeuten und n+m = 3 oder 4, vorzugsweise 3 ist, und wobei jedes der n Sauerstoffatome an A3 gebunden ist,
B1 einen aliphatischen oder cycloaliphatischen Rest mit 2 - 10, vorzugsweise 4 - 8 C-Atomen,
B2 einen aliphatischen oder cycloaliphatischen Rest mit 3 - 6, vorzugsweise einen aliphatischen Rest mit 3 oder 4 C-Atomen, worin p die Zahlen 1 oder 2 bedeutet, und wobei jedes der p Sauerstoffatome an B2 gebunden ist,
C1 einen aliphatischen oder ein- oder zweikernigen cycloaliphatischen Rest mit 2 bis 12 C-Atomen, vorzugsweise mit 5-12 C-Atomen und
D1 einen aliphatischen oder ein- oder zweikernigen cycloaliphatischen Rest mit 5 bis 36 C-Atomen, vorzugsweise mit 6-20, insbesondere 10-16 C-Atomen, bedeuten.

**15.** Wäßrige Zubereitung zur Ausrüstung schwerentflammbarer Textilmaterialien gemäß Anspruch 14, dadurch gekennzeichnet, daß die Anteile der Bausteine I bis III, bezogen auf deren Gesamtmenge, innerhalb folgender Grenzen liegen:

| | |
|---|---|
| I : | 40 bis 80 Mol-%, |
| II : | 10 bis 40 Mol-%, |
| III : | 0 bis 25 Mol-%, |

die Anteile der Bausteine IV, V und VI, bezogen auf deren Gesamtmenge, innerhalb folgender Grenzen liegen:

IV : 65 bis 95 Mol-%,
V : 0 bis 19 Mol-%,
VI : 3 bis 16 Mol-%,

wobei die Bausteine der Formeln I, II und IV Polyesterblöcke mit einem mittleren Molekulargewicht von 400 bis 6000 bilden
und die Anteile der Bausteine der Formel VII, bezogen auf die Gesamtmenge aller Komponenten des Polyurethanharzes, 5 bis 35 Mol-%, vorzugsweise 10 bis 25 Mol-% betragen.

**16.** Wässrige Zubereitung gemäß Anspruch 15, dadurch gekennzeichnet, daß die Zubereitung

| | |
|---|---|
| 30 - 55 Gew.-% | des Polyurethanharzes, |
| 5 - 10 Gew.-% | des aprotischen, wasserlöslichen, linearen oder cyclischen Carbonamids und |
| 40 - 65 Gew.-% | Wasser enthält. |

**17.** Verwendung der wäßrigen Zubereitung der Ansprüche 14 bis 16 zur Ausrüstung von schwerentflammbaren Textilmaterialien aus thermoplastischen Synthesefasern.

**18.** Verfahren zur Herstellung eines schwerentflammbaren Teppichbodens bei dem zunächst nach einem der bekannten Knüpf-, Web-, Kettwirk- oder Tufting-Verfahren ein unverfestigter Teppichboden aus einem Träger und darin eingebundenen Polgarnen hergestellt, wie üblich gefärbt und gegebenenfalls geschoren und anschließend gewaschen wird, um vorhandene Spinnavivagen zu entfernen, anschließend rückseitig durch Sprühauftrag, durch Aufbürsten, Aufrakeln oder Aufschäumen, gegebenenfalls unter Zusatz eines Schäumers zur Zubereitung, vorzugsweise aber durch Pflatschen mittels Pflatschwalzen eine Rückenausrüstung aufgetragen wird, dadurch gekennzeichnet, daß als Rückenausrüstung eine Polyurethanzubereitung aufgetragen wird, die folgende Zusammensetzung aufweist:

| | |
|---|---|
| 20 - 60 Gew.-% | des in Anspruch 1 definierten Polyurethanharzes, |
| 3 - 15 Gew.-% | eines aprotischen, wasserlöslichen, linearen oder cyclischen Carbonsäureamids mit einer Kettenlänge der zugrundeliegenden Carbonsäure von 1 bis 5 C-Atomen und |
| 37 - 77 Gew.-% | Wasser, |

und nach dem Auftrag dieser Rückenausrüstung der Teppich bei Temperaturen von 80 bis 180°C, vorzugsweise 120 bis 150 °C, getrocknet wird.

**19.** Verfahren gemäß Anspruch 18, dadurch gekennzeichnet, daß die als Rückenausrüstung aufgetragene Zubereitung

| | |
|---|---|
| 30 - 55 Gew.-% | des Polyurethanharzes, |
| 5 - 10 Gew.-% | des aprotischen, wasserlöslichen, linearen oder cyclischen Carbonamids und |
| 40 - 65 Gew.-% | Wasser enthält. |

**20.** Verfahren gemäß mindestens einem der Ansprüche 18 und 19, dadurch gekennzeichnet, daß die Auftragsmenge der Polyurethanzubereitung so bemessen wird, daß in der Ebene des Trägers eine gründliche Durchtränkung der Fasern und eine Ausfüllung der Faserzwischenräume mit dem Polyurethan stattfinden kann, ein darüber hinausgehender Auftrag, der zur Ausbildung einer reinen Polyurethanschicht führt, jedoch vermieden wird.

**21.** Verfahren gemäß mindestens einem der Ansprüche 18 bis 20, dadurch gekennzeichnet, daß als Material für den Teppichträger, insbesondere aber für den Pol, Garne aus schwerentflammbaren Polyestern eingesetzt werden.

## Claims

**1.** A low flammability carpet floor covering comprising a support material, a tied-in pile yarn, and a back finish, characterized in that the pile yarn comprises low flammability synthetic fibers, the support material comprises normal or low flammability synthetic fibers, and the back finish comprises a polyurethane composed of the building blocks of the formulae I to VII:

$$-CO-A1-CO- \quad (I),$$

$$-CO-A2-CO- \quad (II),$$

$$\text{optionally } (-O-)_n-A3-(COOH)_m \quad (III),$$

$$-O-B1-O- \quad (IV),$$

$$\text{optionally } -O-B2-(O-)_p \quad (V),$$

$$-NH-C1-NH- \quad (VI)$$

and

$$-CO-NH-D1-NH-CO- \quad (VII),$$

where

A1 is an aliphatic radical having from 2 to 12, preferably 4-10, in particular 4-8, carbon atoms,
A2 is a phenyl radical, preferably an o-, m- or p-phenyl radical,
A3 is an aliphatic radical having 2-10, preferably 4-8, carbon atoms, with n and m each being 1 or 2 and n + m being 3 or 4, preferably 3, and each of the n oxygen atoms being attached to A3,
B1 is an aliphatic or cycloaliphatic radical having 2-10, preferably 4-8, carbon atoms,
B2 is an aliphatic or cycloaliphatic radical having 3-6 carbon atoms, preferably an aliphatic radical having 3 or 4 carbon atoms with p being 1 or 2 and each of the p oxygen atoms being attached to B2,
C1 is an aliphatic or mono- or bicyclic cycloaliphatic radical having from 2 to 12 carbon atoms, preferably 5-12 carbon atoms, and
D1 is an aliphatic or mono- or bicyclic cycloaliphatic radical having from 5 to 36 carbon atoms, preferably 6-20, in particular 10-16, carbon atoms.

**2.** The low flammability carpet floor covering of claim 1, characterized in that the proportions of the building blocks I to III, based on their total amount, are within the following limits:

I : 40 to 80 mol %,
II : 10 to 40 mol %,
III : 0 to 25 mol %,

the proportions of the building blocks IV, V and VI, based on their total amount, are within the following limits:

IV : 65 to 95 mol %,
V : 0 to 19 mol %,
VI : 3 to 16 mol %,

the building blocks of the formulae I, II and IV forming polyester blocks having an average molecular weight of from 400 to 6000
and the proportions of the building blocks of the formula VII, based on the total amount of all the components of the polyurethane resin, being from 5 to 35 mol %, preferably from 10 to 25 mol %.

**3.** The low flammability carpet floor covering of claim 2, characterized in that the proportions of the building blocks I to III, based on their total amount, are within the following limits:

I : at least 50 mol %
II : 15 to 35 mol %
III : 10 to 20 mol %

and the proportions of the building blocks IV, V and VI, based on their total amount, are within the following limits:

IV : 75 to 95 mol %
V : 0 to 19 mol %
VI : 4.5 to 10 mol %.

**4.** The low flammability carpet floor covering of at least one of claims 1 to 3, characterized in that the weight proportions of pile material, support and finish in the low flammability carpet floor covering of the invention are about 700 to 1300 g/$m^2$ of pile material, 80 to 250 g/$m^2$ of support and 150 to 500 g/$m^2$, preferably 200 to 300 g/$m^2$, of polyurethane finish.

**5.** The low flammability carpet floor covering of at least one of claims 1 to 4, characterized in that the support has a thread density corresponding to about 60 to 150 warp threads and 80 to 165 filling threads per 10 cm.

**6.** The low flammability carpet floor covering of at least one of claims 1 to 5, characterized in that the support comprises normal flammability thermoplastic synthetic fiber materials.

**7.** The low flammability carpet floor covering of at least one of claims 1 to 6, characterized in that the support comprises normal flammability thermoplastic synthetic fibers and has the structure of a web, in particular of a spunbonded web.

**8.** The low flammability carpet floor covering of at least one of claims 1 to 5, characterized in that the yarns of the support too comprise low flammability synthetic fibers.

**9.** The low flammability carpet floor covering of at least one of claims 1 to 8, characterized in that the low flammability of the synthetic fiber material is due to additions of halogen compounds or of phosphorus compounds.

**10.** The low flammability carpet floor covering of at least one of claims 1 to 9, characterized in that the thermoplastic synthetic fibers are polyester fibers.

**11.** The low flammability carpet floor covering of at least one of claims 1 to 10, characterized in that the low flammability polyesters contain, cocondensed in the chain, building blocks of the formula VIII

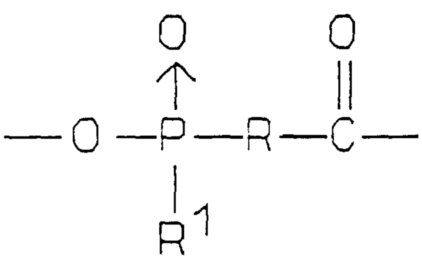

**(VIII)**

where R is alkylene or polymethylene having from 2 to 6 carbon atoms or phenyl and $R^1$ is alkyl having from 1 to 6 carbon atoms, aryl or aralkyl.

**12.** The use of a polyurethane composed of the building blocks of the formulae I to VII

-CO-A1-CO- (I),

-CO-A2-CO- (II),

optionally $(-O-)_n$-A3- $(COOH)_m$ (III),

-O-B1-O- (IV),

optionally -O-B2-$(O-)_p$ (V),

-NH-C1-NH- (VI)

and

-CO-NH-D1-NH-CO- (VII),

where

A1 is an aliphatic radical having from 2 to 12, preferably 4-10, in particular 4-8, carbon atoms,
A2 is a phenyl radical, preferably an o-, m- or p-phenyl radical,
A3 is an aliphatic radical having 2-10, preferably 4-8, carbon atoms, with n and m each being 1 or 2 and n + m being 3 or 4, preferably 3, and each of the n oxygen atoms being attached to A3,
B1 is an aliphatic or cycloaliphatic radical having 2-10, preferably 4-8, carbon atoms,
B2 is an aliphatic or cycloaliphatic radical having 3-6 carbon atoms, preferably an aliphatic radical having 3 or 4 carbon atoms with p being 1 or 2 and each of the p oxygen atoms being attached to B2,
C1 is an aliphatic or mono- or bicyclic cycloaliphatic radical having from 2 to 12 carbon atoms, preferably 5-12 carbon atoms, and
D1 is an aliphatic or mono- or bicyclic cycloaliphatic radical having from 5 to 36 carbon atoms, preferably 6-20, in particular 10-16, carbon atoms, as a finish in the production of low flammability textile materials from thermoplastic synthetic fibers.

**13.** The use of the polyurethane of claim 12, characterized in that the proportions of the building blocks I to III, based on their total amount, are within the following limits:

I : 40 to 80 mol %,
II : 10 to 40 mol %,
III : 0 to 25 mol %,

the proportions of the building blocks IV, V and VI, based on their total amount, are within the following limits:

IV : 65 to 95 mol %,
V : 0 to 19 mol %,
VI : 3 to 16 mol %,

the building blocks of the formulae I, II and IV forming polyester blocks having an average molecular weight of from 400 to 6000
and the proportions of the building blocks of the formula VII, based on the total amount of all the components of the polyurethane resin, being from 5 to 35 mol %, preferably from 10 to 25 mol %.

**14.** An aqueous finish for use in the production of low flammability textile materials from thermoplastic synthetic fibers, comprising

| | |
|---|---|
| 20 - 60 % by weight | of a polyurethane resin, |
| 3 - 15 % by weight | of an aprotic, water-soluble, linear or cyclic carboxamide based on a carboxylic acid having a chain length of from 1 to 5 carbon atoms, and |
| 37 - 77 % by weight | of water, |

which may additionally include customary additives, such as thickeners, antimigration agents, emulsion stabilizers, fillers or pigments in a proportion of up to 15 % by weight of the total mixture,
where the polyurethane is composed of the building blocks of the formulae I to VII

$$-CO-A1-CO- \quad (I),$$

$$-CO-A2-CO- \quad (II),$$

$$\text{optionally } (-O-)_n-A3-(COOH)_m \quad (III),$$

$$-O-B1-O- \quad (IV),$$

$$\text{optionally } -O-B2-(O-)_p \quad (V),$$

$$-NH-C1-NH- \quad (VI)$$

and

$$-CO-NH-D1-NH-CO- \quad (VII),$$

where

A1 is an aliphatic radical having from 2 to 12, preferably 4-10, in particular 4-8, carbon atoms,
A2 is a phenyl radical, preferably an o-, m- or p-phenyl radical,
A3 is an aliphatic radical having 2-10, preferably 4-8, carbon atoms, with n and m each being 1 or 2 and n + m being 3 or 4, preferably 3, and each of the n oxygen atoms being attached to A3,
B1 is an aliphatic or cycloaliphatic radical having 2-10, preferably 4-8, carbon atoms,
B2 is an aliphatic or cycloaliphatic radical having 3-6 carbon atoms, preferably an aliphatic radical having 3 or 4 carbon atoms with p being 1 or 2 and each of the p oxygen atoms being attached to B2,
C1 is an aliphatic or mono- or bicyclic cycloaliphatic radical having from 2 to 12 carbon atoms, preferably 5-12 carbon atoms, and
D1 is an aliphatic or mono- or bicyclic cycloaliphatic radical having from 5 to 36 carbon atoms, preferably 6-20, in particular 10-16, carbon atoms.

**15.** The aqueous finish for use in the production of low flammability textile materials of claim 14, characterized in that the proportions of the building blocks I to III, based on their total amount, are within the following limits:

I : 40 to 80 mol %,
II : 10 to 40 mol %,
III : 0 to 25 mol %,

the proportions of the building blocks IV, V and VI, based on their total amount, are within the following limits:

IV : 65 to 95 mol %,
V : 0 to 19 mol %,
VI : 3 to 16 mol %,

the building blocks of the formulae I, II and IV forming polyester blocks having an average molecular weight of from 400 to 6000
and the proportions of the building blocks of the formula VII, based on the total amount of all the components of

the polyurethane resin, being from 5 to 35 mol %, preferably from 10 to 25 mol %.

**16.** The aqueous finish of claim 15, comprising

| | |
|---|---|
| 30 - 55 % by weight | of the polyurethane resin, |
| 5 - 10 % by weight | of the aprotic, water-soluble, linear or cyclic carboxamide, and |
| 40 - 65 % by weight | of water. |

**17.** The use of the aqueous finish of claims 14 to 16 for producing low flammability textile materials from thermoplastic synthetic fibers.

**18.** A process for producing a low flammability carpet floor covering by first using one of the known knotting, weaving, warp-knitting or tufting processes to produce an unbound carpet floor covering comprising a support and tied-in pile yarns, dyeing as usual, optionally cutting the pile, then washing to remove existing spin finishes, and then applying a finish from the back by spraying, brushing, knife-coating or foaming, with or without the addition of a foamer to the finish, but preferably by kiss roll padding, characterized in that a back finish comprising a polyurethane preparation of the following composition:

| | |
|---|---|
| 20 - 60 % by weight | of the polyurethane resin defined in claim 1, |
| 3 - 15 % by weight | of an aprotic, water-soluble, linear or cyclic carboxamide based on a carboxylic acid having a chain length of from 1 to 5 carbon atoms, and |
| 37 - 77 % by weight | of water, |

is applied and, after this back finish has been applied, drying the carpet is dried at temperatures of from 80 to 180°C, preferably from 120 to 150°C.

**19.** The process of claim 18, characterized in that the back finish comprises

| | |
|---|---|
| 30 - 55 % by weight | of the polyurethane resin, |
| 5 - 10 % by weight | of the aprotic, water-soluble, linear or cyclic carboxamide, and |
| 40 - 65 % by weight | of water. |

**20.** The process of at least one of claims 18 and 19, characterized in that the amount applied of the polyurethane finish is such that in the plane of the support thorough impregnation of the fibers and filling of the fiber interstices with the polyurethane can take place, but not enough to lead to the formation of a pure polyurethane layer.

**21.** The process of at least one of claims 18 to 20, characterized in that the material used for the carpet support, but in particular for the pile, is yarn of low flammability polyester.

**Revendications**

**1.** Tapis difficilement inflammable composé d'une matière support, d'un fil poil et d'un apprêt de dossier, caractérisé en ce que le fil poil est une fibre synthétique difficilement inflammable, la matière support de fibres synthétiques normales ou difficilement inflammables et l'apprêt du dossier est un polyuréthanne, constitué de blocs de construction de formules I à VII :

$$-CO-A1-CO- \qquad (I)$$

$$-CO-A2-CO- \qquad (II)$$

$$\text{éventuellement } -(O)_n-A3-(COOH)_m \qquad (III)$$

-O-B1-O- (IV)

éventuellement -O-B2-(O-)$_p$ (V)

-NH-C1-NH- (VI)

et

-CO-NH-D1-NH-CO- (VII)

où

A1 représente un radical aliphatique avec 2 à 12, de préférence 4 à 10, plus particulièrement 4 à 8, atomes de carbone,
A2 représente un radical phényle, de préférence un radical o-, m- ou p-phényle,
A3 représente un radical aliphatique avec 2 à 10, de préférence 4 à 8 atomes de carbone, n et m valant chacun 1 ou 2 et n + m = 3 ou 4, de préférence 3, et chacun des atomes d'oxygène de n étant lié à A3,
B1 représente un radical aliphatique ou cycloaliphatique avec 3 à 6, de préférence un radical aliphatique avec 3 ou 4 atomes de carbone, p valant 1 ou 2 et chacun des atomes d'oxygène de p étant lié à B2,
C1 représente un radical aliphatique ou cycloaliphatique mono- ou bicyclique avec 2 à 12 atomes de carbone, de préférence avec 5 à 12 atomes de carbone, et
D1 représente un radical aliphatique ou cycloaliphatique mono- ou bicyclique avec 5 à 36 atomes de carbone, de préférence avec 6 à 20, notamment 10 à 16 atomes de carbone.

**2.** Tapis difficilement inflammable selon la revendication 1, caractérisé en ce que les taux en blocs de construction I à III, par rapport à la quantité totale, se trouvent dans les limites :

I : 40 à 80 % en moles,
II : 10 à 40 % en moles,
III : 0 à 25 % en moles,

les taux en blocs de constructon IV, V et VI, par rapport à leur quantité totale, dans les limites suivantes :

IV : 65 à 95 % en moles,
V : 0 à 19 % en moles,
VI : 3 à 16 % en moles,

les blocs de construction de formules I, II et IV formant des séquences polyester avec un poids moléculaire moyen de 400 à 6000, et les taux en blocs de construction de formule VII, par rapport à la quantité totale de tous les composants de la résine polyuréthanne est de 5 à 35 % en moles, de préférence de 10 à 25 % en moles.

**3.** Tapis difficilement inflammable selon la revendication 2, caractérisé en ce que les taux en blocs de construction de formules I à III, par rapport à la quantité totale, se trouvent dans les limites :

I : d'au moins 50 % en moles
II : 15 à 35 % en moles,
III : 10 à 20 % en moles

et les autres taux en blocs de construction IV, V et VI, par rapport à la quantité totale se trouvent dans les limites suivantes :

IV : 75 à 95 % en moles,
V : 0 à 19 % en moles,

VI : 4,5 à 10 % en moles.

**4.** Tapis difficilement inflammable selon au moins l'une des revendications 1 à 3, caractérisé en ce que le taux pondéral en matière de poils, en support et en agent d'apprêt du tapis difficilement inflammables conformes à l'invention sont d'environ 700 à 1300 g/$m^2$ de fils de poils, de 80 à 250 g/$m^2$ de support et de 150 à 500 g/$m^2$ d'apprêt polyuréthanne.

**5.** Tapis difficilement inflammable selon au moins l'une des revendications 1 à 4, caractérisé en ce que le support correspond à une compte en fils d'environ 60 à 150 fils de chaîne et de 80 à 165 fils de trame pour 10 cm.

**6.** Tapis difficilement inflammable selon au moins l'une des revendications 1 à 5, caractérisé en ce que le support est constitué de fibres synthétiques thermoplastiques normalement inflammables.

**7.** Tapis difficilement inflammable selon au moins l'une des revendications 1 à 6, caractérisé en ce que le support est constitué de fibres synthétiques thermoplastiques normalement inflammables et présente une structure d'un voile, plus particulière d'un spunbond.

**8.** Tapis difficilement inflammable selon au moins l'une des revendications 1 à 5, caractérisé en ce que les filés du support sont en fibres synthétiques difficilement inflammables.

**9.** Tapis difficilement inflammable selon au moins l'une des revendications 1 à 8, caractérisé en ce qu'on réalise l'inflammabilité difficile de la matière en fibres synthétiques à l'aide de composés halogénés ou de composés de phosphore.

**10.** Tapis difficilement inflammable selon au moins l'une des revendications 1 à 9, caractérisé en ce que les fibres synthétiques thermoplastiques sont des fibres polyester.

**11.** Tapis difficilement inflammable selon au moins l'une des revendications 1 à 10, caractérisé en ce que les polyesters difficilement inflammables contiennent condensée dans la chaîne des groupes de construction de formule VIII

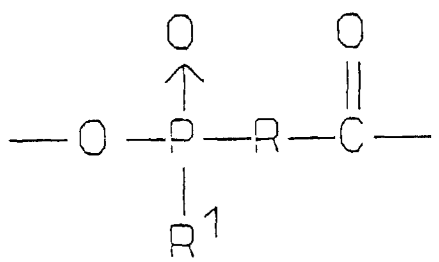

(VIII)

où R représente alkylène ou polyméthylène avec 2 à 6 atomes de carbone ou phényle et $R^1$ représente alkyle avec 1 à 6 atomes de carbone, aryle ou aralkyle.

**12.** Utilisation d'un polyuréthanne constitué de blocs de construction de formules I à VII

$$-CO-A1-CO- \quad (I)$$

$$-CO-A2-CO- \quad (II)$$

éventuellement $-(O)_n-A3-(COOH)_m$ (III)

-O-B1-O- (IV)

éventuellement $-O-B2-(O)_p$ (V)

-NH-C1-NH- (VI)

et

-CO-NH-D1-NH-CO- (VII)

où

A1 représente un radical aliphatique avec 2 à 12, de préférence 4 à 10, plus particulièrement 4 à 8 atomes de carbone,
A2 représente un radical phényle, de préférence un radical o-, m- ou p-phényle,
A3 représente un radical aliphatique avec 2 à 10, de préférence 4 à 8 atomes de carbone, n et m valant chacun 1 ou 2 et n + m = 3 ou 4, de préférence 3, et chacun des atomes d'oxygène de n étant lié à A3,
B1 représente un radical aliphatique ou cycloaliphatique avec 3 à 6, de préférence un radical aliphatique avec 3 ou 4 atomes de carbone, p valant 1 ou 2 et chacun des atomes d'oxygène de p étant lié à B2,
C1 représente un radical aliphatique ou cycloaliphatique mono- ou bicyclique avec 2 à 12 atomes de carbone, de préférence avec 5 à 12 atomes de carbone, et
D1 représente un radical aliphatique ou cycloaliphatique mono- ou bicyclique avec 5 à 36 atomes de carbone, de préférence avec 6 à 20, notamment de 10 à 16 atomes de carbone, pour l'apprêt de matières pour tapis difficilement inflammables en fibres synthétiques thermoplastiques.

**13.** Utilisation du polyuréthanne selon la revendication 12, caractérisée en ce que les taux en blocs de construction I à III, par rapport à la quantité totale, se trouvent dans les limites :

I : 40 à 80 % en moles,
II : 10 à 40 % en moles,
III : 0 à 25 % en moles,

les taux en blocs de constructon IV, V et VI, par rapport à leur quantité totale, dans les limites suivantes :

IV : 65 à 95 % en moles,
V : 0 à 19 % en moles,
VI : 3 à 16 % en moles,

les blocs de construction de formules I, II et IV formant des séquences polyester avec un poids moléculaire moyen de 400 à 6000, et les taux en blocs de construction de formule VII, par rapport à la quantité totale de tous les composants de la résine polyuréthanne est de 5 à 35 % en moles, de préférence de 10 à 25 % en moles.

**14.** Préparation aqueuse pour l'apprêt de matières textiles difficilement inflammables en fibres synthétiques thermoplastiques, conmposée de

20 à 60 % en poids d'une résine polyuréthanne,
3 à 15 % en poids d'un amide d'acide carboxylique aprotique, soluble dans l'eau, linéaire ou cyclique, ayant une longueur de chaîne de l'acide carboxylique de base de 1 à 5 atomes de carbone, et
37 à 77 % en poids d'eau,

qui contient éventuellement de plus d'autres additifs, tels qu'épaississants, agents anti-migratoires, stabilisants d'émulsions, charges ou pigments dans un taux allant jusqu'à 15 % en poids du poids total,
le polyuréthanne étant constitué de blocs de construction de formules I à VII

-CO-A1-CO- (I)

-CO-A2-CO- (II)

éventuellement $-(O)_n$-A3-$(COOH)_m$ (III)

-O-B1-O- (IV)

éventuellement -O-B2-$(O-)_p$ (V)

-NH-C1-NH- (VI)

et

-CO-NH-D1-NH-CO- (VII)

où

A1 représente un radical aliphatique avec 2 à 12, de préférence 4 à 10, plus particulièrement 4 à 8 atomes de carbone,
A2 représente un radical phényle, de préférence un radical o-, m- ou p-phényle,
A3 représente un radical aliphatique avec 2 à 10, de préférence 4 à 8 atomes de carbone, n et m valant chacun 1 ou 2 et n + m = 3 ou 4, de préférence 3, et chacun des atomes d'oxygène de n étant lié à A3,
B1 représente un radical aliphatique ou cycloaliphatique avec 3 à 6, de préférence un radical aliphatique avec 3 ou 4 atomes de carbone, p valant 1 ou 2 et chacun des atomes d'oxygène de p étant lié à B2,
C1 représente un radical aliphatique ou cycloaliphatique mono- ou bicyclique avec 2 à 12 atomes de carbone, de préférence avec 5 à 12 atomes de carbone, et
D1 représente un radical aliphatique ou cycloaliphatique mono- ou bicyclique avec 5 à 36 atomes de carbone, de préférence avec 6 à 20, notamment de 10 à 16 atomes de carbone.

**15.** Préparation aqueuse pour l'apprêt de matières textile difficilement inflammables selon la revendication 14, caractérisé en ce que les taux en blocs de construction I à III, par rapport à la quantité totale, se trouvent dans les limites suivantes :

I : 40 à 80 % en moles,
II : 10 à 40 % en moles,
III : 0 à 25 % en moles,

les taux en blocs de constructon IV, V et VI, par rapport à leur quantité totale, dans les limites suivantes :

IV : 65 à 95 % en moles,
V : 0 à 19 % en moles,
VI : 3 à 16 % en moles,

les blocs de construction de formules I, II et IV formant des séquences polyester avec un poids moléculaire moyen de 400 à 6000,
et les taux en blocs de construction de formule VII, par rapport à la quantité totale de tous les composants de la résine polyuréthanne sont de 5 à 35 % en moles, de préférence de 10 à 25 % en moles.

**16.** Préparation aqueuse selon la revendication 15, caractérisée en ce que la préparation contient

| | |
|---|---|
| 30 à 55 % en poids | d'une résine polyuréthanne, |
| 5 à 10 % en poids | du carboxamide aprotique, soluble dans l'eau, linéaire ou cyclique, et |
| 40 à 65 % en poids | d'eau. |

**17.** Utilisation de la préparation aqueuse des revendications 14 à 16, pour l'apprêt de matières textile difficilement inflammables en fibres synthétiques thermoplastiques.

**18.** Procédé pour la préparation d'un tapis difficilement inflammable où l'on prépare d'abord à l'aide de procédés de nouage, de tissage, de chaîne ou de tufting un tapis non consolidé constitué d'un support et de fils de poils tissés dans le tapis, on teint selon les procédés usuuels et éventuellement on rase et on lave ensuite, afin d'éliminer des avivages de tissage évetuellement présents, ensuite on dépose un apprêt du dossier par pulvérisation, par brossage, à la racle ou moussage, éventuellement en ajoutant un agent moussant pour la préparation, mais de préférence par plaquage à l'aide de cylindres de plaquage, caractérisé en ce que en tant que l'apprêt du dossier on dépose une préparation de polyuréthanne, qui présente la composition suivante :

| | |
|---|---|
| 20 à 60 % en poids | de la résine polyuréthanne définie dans la revendication 1 |
| 3 à 15 % en poids | d'un amide d'acide carboxylique aprotique, soluble dans l'eau, linéaire ou cyclique, ayant une longueur de chaîne de l'acide carboxylique de base de 1 à 5 atomes de carbone, et |
| 37 à 77 % en poids | d'eau, |

et après dépôt de cet apprêt du dossier, on sèche le tapis à des températures de 80 à 180°C, de préférence de 120 à 150°C.

**19.** Procédé selon la revendication 18, caractérisé en ce que la composition déposée comme apprêt du dossier, contient

| | |
|---|---|
| 30 à 55 % en poids | de la résine polyuréthanne, |
| 5 à 10 % en poids | du carboxamide aprotique, soluble dans l'eau, linéaire ou cyclique, et |
| 40 à 65 % en poids | d'eau. |

**20.** Procédé selon au moins l'une des revendications 18 à 19, caractérisé en ce que la quantité appliquée de la préparation polyuréthanne est calculée de façon telle qu'une imbibition complète des fibres au niveau du support et un remplissage des espaces interstitiels entre les fibres puissent avoir lieu, tout en évitant toutefois un dépôt excédentaire, ce qui conduirait à la formation d'une couche de polyuréthanne pur.

**21.** Procédé selon au moins l'une des revendications 18 à 20, caractérisé en ce que comme matière de support de tapis, mais notamment pour le poil, on utilise des filés polyester difficilement inflammables.

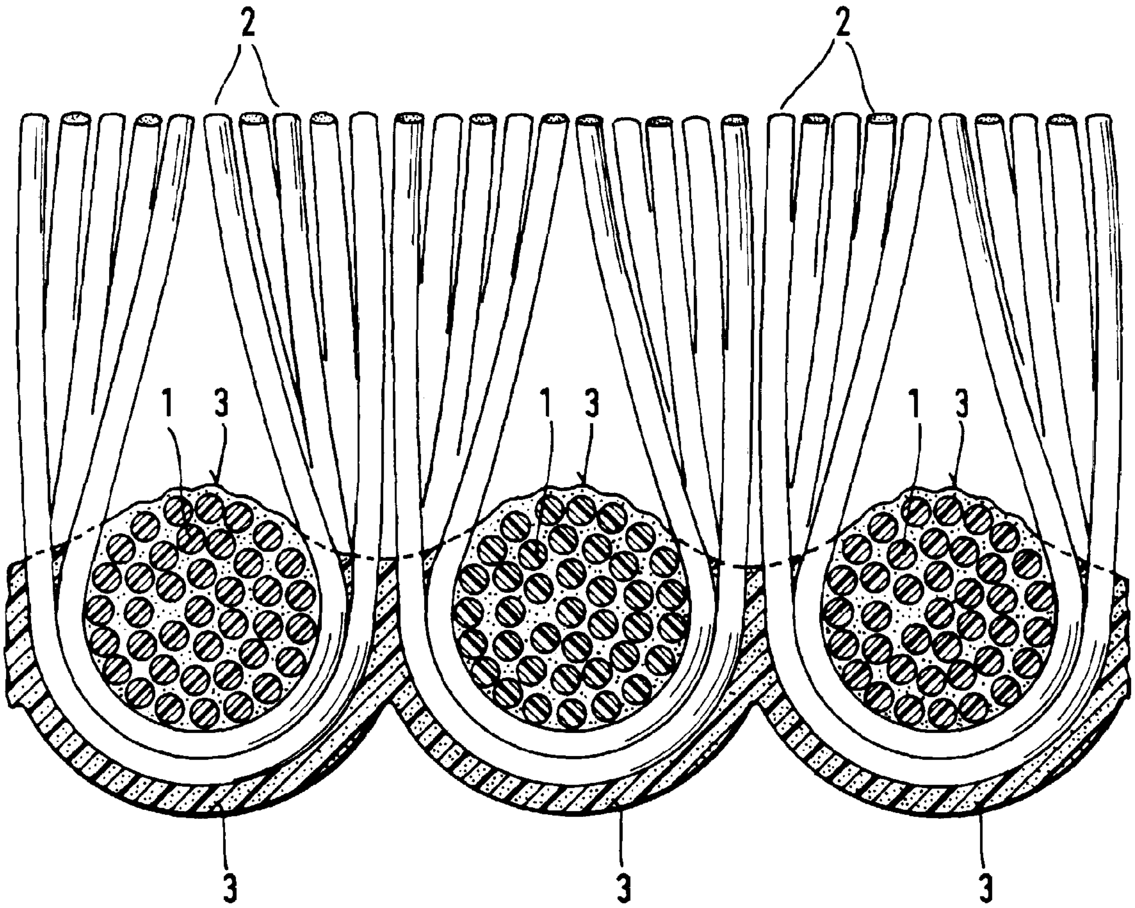
2
2
1
3
1
3
1
3
3
3
3